# EUROPÄISCHE PATENTSCHRIFT

(11) **EP 2 633 779 B1**
(45) Veröffentlichungstag und Bekanntmachung des Hinweises auf die Patenterteilung: **27.05.2015**
(21) Anmeldenummer: 13156627.5
(22) Anmeldetag: 25.02.2013
(51) Int. Cl.: A47B 13/02, F16B 12/40

(54) **Tragsäule zur Abstützung eines Möbelteiles**
Column for supporting a furniture part
Colonne porteuse pour le soutien d'une partie de meuble

(30) Priorität: 28.02.2012 DE 102012101628
(43) Veröffentlichungstag der Anmeldung: 04.09.2013
(73) Patentinhaber: Paul Hettich GmbH & Co. KG, 32278 Kirchlengern (DE)
(72) Erfinder: Sobolewski, Uwe, 32257 Bünde (DE); Andschus, Stefan, 32312 Lübbecke (DE); Prior, Thomas, 51519 Odenthal (DE)
(74) Vertreter: Kleine, Hubertus

(56) Entgegenhaltungen:
- EP-A1- 2 243 969
- DE-A1-102005 045 455
- DE-U1- 9 421 515
- DE-U1-202004 009 888
- US-A1- 2010 282 135

## Beschreibung

Die vorliegende Erfindung betrifft eine Tragsäule in Form eines Hohlprofiles zur Abstützung eines Möbelteiles, wobei an mindestens einem stirnseitigen Ende des mit mehreren Längsnuten versehenen Hohlprofiles ein Adapter im Hohlprofil versenkt befestigt ist und der Adapter mit Verbindungsmitteln zum Anschluss von beispielsweise Trägern für Tischplatten, zum Anschluss von Fußteilen oder Fußgestellen oder dergleichen versehen ist.

Tragsäulen der gattungsgemäßen Art sind an sich bekannt.

Zum Stand der Technik wird auf die DE 10 2005 045 455 A1 verwiesen, in der eine Tragsäule der gattungsgemäßen Art gezeigt ist, bei der der Adapter versenkt innerhalb des Hohlprofiles angeordnet ist.

Bei dem bekannten Stand der Technik ist der Adapter mit mehreren Verspannelementen versehen, die ein Verklemmen des Adapters innerhalb der Querschnittsebene des Hohlprofiles ermöglichen.

Nachteilig bei dieser Ausführungsform ist, dass der Adapter mehrteilig ausgebildet sein muss und die einzelnen Verspannelemente zur kraftschlüssigen Festlegung innerhalb des Hohlprofiles einzeln betätigt bzw. gedreht werden müssen, um ausreichende Spannkräfte aufbringen zu können. Außerdem besteht bei einer derartigen Konstruktion die Gefahr, dass das Hohlprofil zumindest geringfügig verformt werden kann, wenn zu hohe Spannkräfte aufgebracht werden.

Der vorliegenden Erfindung liegt die Aufgabe zugrunde, eine Tragsäule der gattungsgemäßen Art so zu gestalten, dass die Anbringung des Adapters innerhalb des Hohlprofiles vereinfacht und die Gefahr der Verformung oder Deformierung des Hohlprofiles bei der Festlegung des Adapters praktisch beseitigt ist.

Diese Aufgabe wird erfindungsgemäß dadurch gelöst, dass der Adapter mit mehreren, in die Längsnuten eingreifenden und dort axial abgestützten Stegen versehen ist, auf deren dem benachbarten freien Ende des Hohlprofiles zugewandten Stirnseite in den Längsnuten kraft- und/oder formschlüssig festgelegte Befestigungsmittel zur axialen Sicherung des Adapters in Richtung eines Trägers, eines Fußteiles oder dergleichen aufliegen.

Bei der Benutzung einer derartigen Tragsäule wird der Adapter durch die Verbindung mit beispielweise einem Träger, einer Tischplatte, einem Fußteil, einem Fußgestell oder dergleichen in Richtung des benachbarten freien Endes kraftmäßig belastet, wobei der Träger, das Fußteil oder das Fußgestell am jeweiligen freien stirnseitigen Ende der Tragsäule anliegt und der Adapter mit seinen Stegen gegen die in den Längsnuten fixierten Befestigungsmittel angezogen wird.

Somit wirken auf das Hohlprofil praktisch nur axial gerichtete Kräfte ein, sodass eine Deformierung des Hohlprofiles im Zusammenhang mit der Festlegung des Adapters im Hohlprofil praktisch nicht auftreten kann.

Die Festlegung des Adapters im Hohlprofil ist auch relativ einfach zu bewerkstelligen, da nach dem Festlegen des Adapters in der gewünschten Einschubtiefe innerhalb des Hohlprofiles lediglich noch die Befestigungsmittel in den Längsnuten zu fixieren sind.

Vorteilhafter Weise sind die Stege durch in die Längsnuten eingebrachte Haltemittel, vorzugsweise Stifte, in axialer Richtung abgestützt.

Mittels geeigneter Vorrichtungen können diese Haltemittel in einer gewünschten Einbringtiefe innerhalb der Längsnuten festgelegt werden, wodurch dann auch die Einschubtiefe des Adapters bestimmt ist.

Ebenso ist ein Einpressen der Haltemittel auf eine gewünschte Einschubtiefe ohne entsprechende Vorrichtungen möglich, indem der Adapter selbst unmittelbar die Pressung vornimmt.

Durch das gemeinsame Einpressen lassen sich in einfacher Weise Maß- und Fertigungstoleranzen eliminieren.

Bei den Haltemitteln kann es sich in vorteilhafter Weise um kraftschlüssig in den Längsnuten festgelegte Spannhülsen, Passstifte oder dergleichen handeln.

Ebenso ist es denkbar, die Haltemittel als Gewindestifte, vorzugsweise selbstschneidende Gewindestifte oder dergleichen auszubilden, wenn die Längsnuten als Schraubkanäle ausgebildet sind.

In einer anderen Ausführungsvariante wird die Abstützung des Adapters durch ein im Hohlprofil kraft-, form und/oder stoffschlüssig festgelegtes einteiliges Spannelement erreicht, welches kranz- oder ringförmig ausgebildet ist und alle Stege gleichermaßen unterstützt. Diese Ausführungsvariante ist besonders in den Anwendungen vorteilhaft, in denen der Adapter nicht bündig mit dem Hohlprofil abschließt, sondern tiefer eingelassen wird, um Bauteile zwischen Adapter und Tischplatte beziehungsweise Boden anordnen zu können, wie beispielsweise Träger, die in seitliche Ausnehmungen des Hohlprofils, eingreifen.

Weiterhin ist als weitere Ausführungsvariante denkbar, die Stege des Adapters und die Haltemittel einstückig auszubilden. Hierbei weisen in vorteilhafter Weise die Haltemittel gegenüber dem Innenmaß der Längsnuten ein Übermaß auf.

Diese vorgenannten Abstützmittel dienen letztendlich lediglich dem Zweck, bei der Montage die Einbringtiefe des Adapters in das Hohlprofil festzulegen und im völlig montierten Zustand, d.h., wenn der Adapter mit einem Träger, einem Fußteil, einem Fußgestell oder dergleichen verbunden ist, wirken auf den Adapter nur noch in Richtung des freien Endes des Hohlprofiles gerichtete Kräfte, sodass die vorgenannten Abstützmittel dann nicht mehr belastet sind.

Auch bei den Befestigungsmitteln für die Fixierung des Adapters in Belastungsrichtung sind verschiedene Möglichkeiten denkbar.

So können die Befestigungsmittel aus Spannhülsen, Raststiften oder bevorzugt auch aus Gewindestiften bestehen.

Sofern Gewindestifte Verwendung finden, werden vorzugsweise selbstschneidende Gewindestifte eingesetzt.

Zusätzlich können die Befestigungsmittel durch Kleben innerhalb der Längsnuten fixiert sein.

Durch den konstruktiven Aufbau sind alle für die Adaption erforderlichen Bauteile unsichtbar im Hohlprofil eingebracht, so dass sich keine störenden Einflüsse auf die Führungsflächen und Dichtflächen an den Außenkonturen der Hohlprofile beziehungsweise drn Kontaktflächen der sich berührenden Hohlprofile ergeben. Dieses bietet dem Endkunden zusätzliche Designfreiheit.

Weitere Merkmale der Erfindung sind Gegenstand weiterer Unteransprüche.

Ein Ausführungsbeispiel der Erfindung ist in den beigefügten Zeichnungen dargestellt und wird im Folgenden näher beschrieben. Es zeigen:
- Figur 1: eine Draufsicht auf einer erfindungsgemäße Tragsäule;
- Figur 2: einen Längsschnitt durch die Tragsäule gemäß der Schnittlinie II-II in Figur 1;
- Figur 3: die in Figur 2 mit III bezeichnete Einzelheit in vergrößerter Darstellung;
- Figur 4: eine perspektivische Sprengbilddarstellung einer Tragsäule mit einem daran festlegbaren Adapter, der zusätzlich eine Antriebseinheit trägt;
- Figur 5: eine Perspektivdarstellung der Tragsäule gemäß Figur 4 im montierten Zustand des Adapters;
- Figuren 6a - 6d: verschiedene Ansichten des Adapters gemäß den Figuren 1 bis 5;
- Figuren 7a und 7b: Perspektivdarstellungen einer Tragsäule mit einem daran festlegbaren Träger im montierten und demontierten Zustand;
- Figur 8: eine perspektivische Sprengbilddarstellung einer Tragsäule nach Figur 7 mit einem daran festlegbaren Adapter und einem einstückig ausgebildeten Haltemittel.

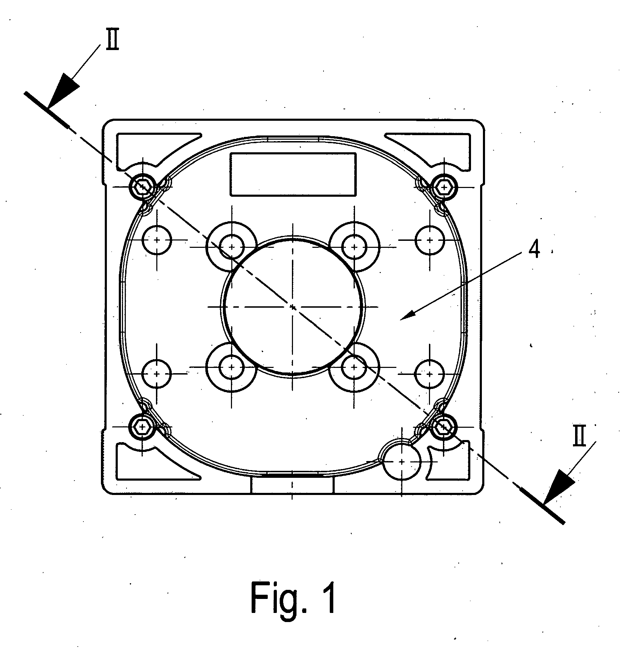

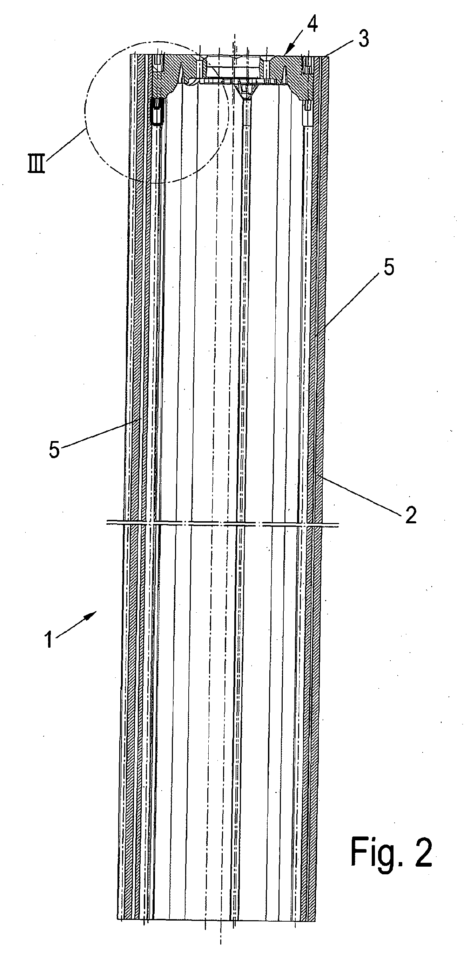

In den Figuren 1 bis 5, 7 und 8 ist mit dem Bezugszeichen 1 insgesamt eine Tragsäule zur Abstützung eines nicht dargestellten Möbelteiles bezeichnet, wobei die Tragsäule 1 in Form eines Hohlprofiles 2 ausgebildet und zumindest im Bereich eines stirnseitigen freien Endes 3 mit einem Adapter 4 versehen ist.

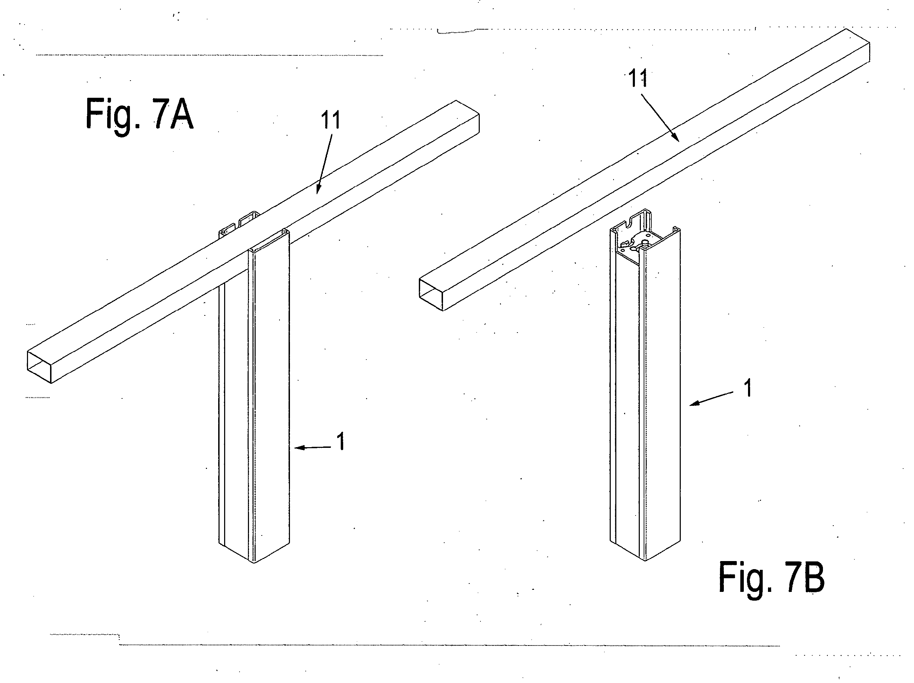

Der Adapter 4 ist in noch zu beschreibender Weise innerhalb des Hohlprofiles 2 festgelegt und dient zur Verbindung der Tragsäule 1 beispielsweise mit einem Träger (in den Figuren 7a und 7b dargestellt) für eine Tischplatte, mit einem Fußteil, einem Fußgestell oder dergleichen, um ein Möbel oder Möbelteil bodenseitig abzustützen.

Das Hohlprofil 2 ist in bekannter Weise mit mehreren Längsnuten 5 versehen, die zur Festlegung des Adapters 4 innerhalb des Hohlprofiles 2 benutzt werden.

In den dargestellten Ausführungsbeispielen ist das Hohlprofil 2 insgesamt mit einem viereckigen Querschnitt ausgestattet. Es versteht sich aber von selbst, dass das Hohlprofil 2 auch jede beliebige andere Querschnittsform aufweisen kann. Entscheidend ist lediglich, dass es sich um ein Hohlprofil mit mehreren Längsnuten 5, vorteilhafterweise mindestens drei, handelt.

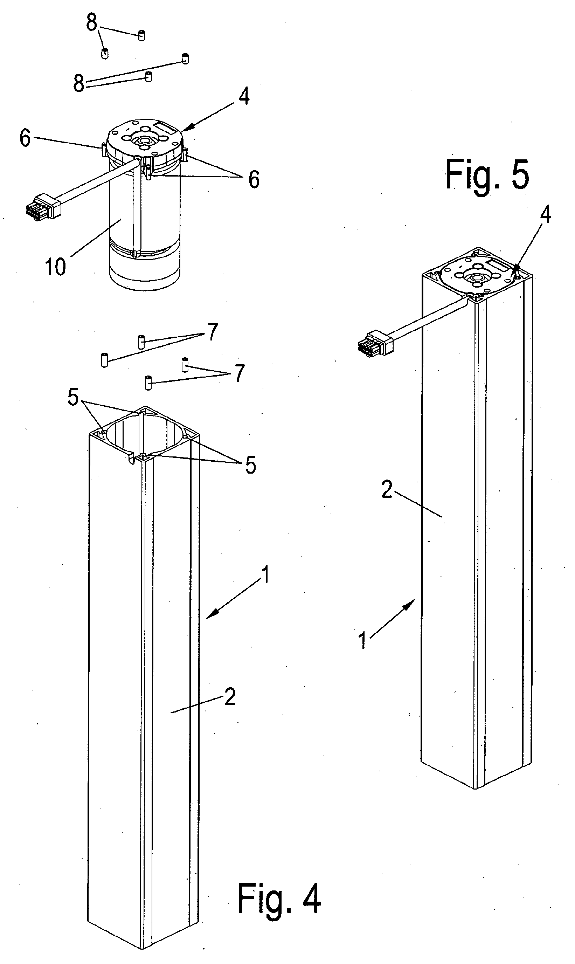

Die Längsnuten 5 liegen beim dargestellten Ausführungsbeispiel im Bereich der Ecken des Hohlprofiles, dessen innerer, lichter Querschnitt etwa kreisförmig gestaltet ist, was beispielsweise Figur 4 sehr bildlich veranschaulicht.

Der Adapter 4 ist hinsichtlich seiner Grundfläche dem lichten Querschnitt des Hohlprofiles 2 angepasst und weist entsprechend der Anzahl der Längsnuten 5 Stege 6 auf, welche in die Längsnuten 5 eingeführt werden können. Diese Stege 6 stehen entsprechend für die Grundfläche des Adapters 4 im Übrigen hinaus vor.

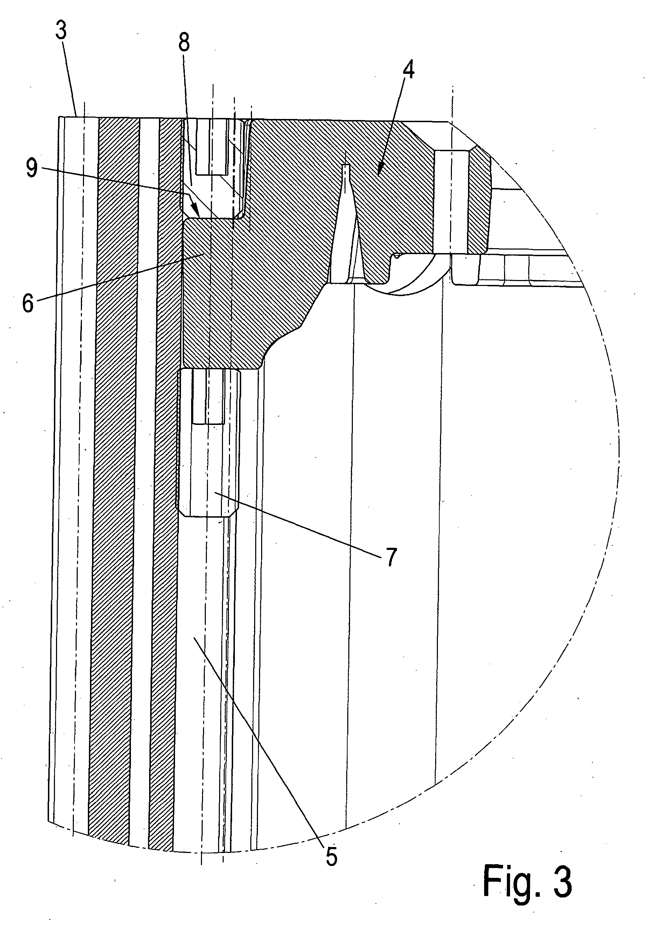

Der Adapter 4 wird mit seinen Stegen 6, wie schon erwähnt, in die Längsnuten 5 eingeführt und versenkt innerhalb des Hohlprofiles 2 fixiert. Zu diesem Zweck sind innerhalb der Längsnuten 5 zur axialen Abstützung der Stege 6 Haltemittel 7, vorzugsweise selbstschneidende Gewindestifte 7, eingebracht. Es ist problemlos möglich, innerhalb der verschiedenen Längsnuten 5 die zur Abstützung des Adapters 4 benötigten Haltemittel 7 in eine vorgegebenen Höhenlage innerhalb des Hohlprofiles 2 einzubringen. Dadurch ergibt sich eine gleichmäßige axiale Abstützung der dem jeweiligen freien Ende 3 des Hohlprofiles abgewandten unteren Seiten der Stege 6. Nachdem der Adapter 4 auf den Haltemitteln 7 aufliegend im Hohlprofil 2 eingebracht ist, werden in die Längsnuten 5 vom benachbarten freien Ende 3 des Hohlprofiles 2 ausgehend Befestigungsmittel 8 in die Längsnuten 5 eingebracht, bis diese Befestigungsmittel 8 auf den dem freien Ende 3 des Hohlprofiles zugewandten Stirnseiten 9 der Stege 6 aufliegen. Dies ist insbesondere in Figur 3 äußert deutlich erkennbar. Bei den Befestigungsmitteln 8, welche zur axialen Abstützung oder axialen Sicherung des Adapters 4 in Richtung des benachbarten freien Endes 3 des Hohlprofiles 2 dienen, handelt es sich bevorzugt um Gewindestifte, welche bevorzugt als selbstschneidende Gewindestifte, in die Längsnuten 5 eingedreht sind.

Alternativ kann es sich hier auch um Spannhülsen oder Passstifte handeln, wobei insbesondere im letzten Falle eine zusätzliche stoffschlüssige Verbindung, beispielsweise eine Verklebung der Befestigungsmittel 8 innerhalb der Längsnuten 5 empfehlenswert ist.

Auch bei den Haltemitteln 7, auf denen die Stege 6 des Adapters 4 unterseitig abgestützt sind, kommt eine zusätzliche stoffschlüssige Verbindung wie beispielsweise eine Verklebung innerhalb der Längsnuten 5 in Betracht und als Haltemittel 7 können auch hier bevorzugt Gewindestifte, selbstschneidende Gewindestifte, Spannelemente, Spannhülsen, Passstifte oder dergleichen Verwendung finden.

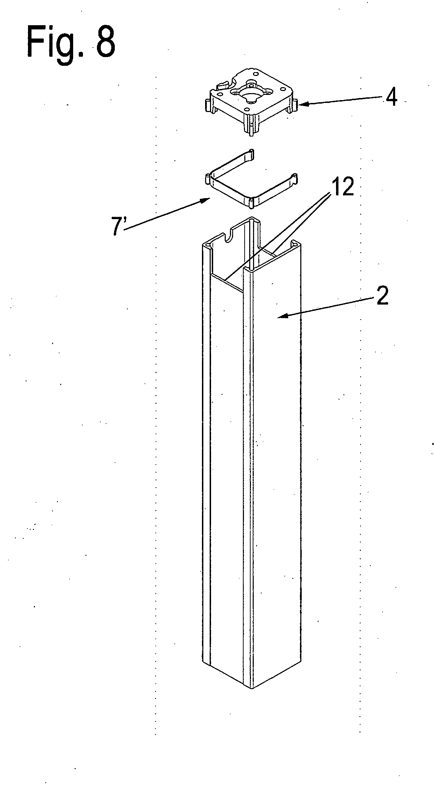

Die Figur 8 zeigt eine weitere Ausführungsvariante eines Haltemittels 7', bei der ein einstückiges, kranz- oder ringförmiges Spannelement die Funktion der einzelnen Haltemittel 7 übernimmt. Das Spannelement 7' wird kraft-, form und/oder stoffschlüssig in das Hohlprofil 2 eingebracht und kann zusammen mit dem Adapter 4 auf die gewünschte Einschubtiefe gebracht werden. Diese Ausführungsvariante eines Haltemittels 7' ist insbesondere für eine Anwendung nach Figur 7 vorteilhaft. Hierbei wird der Adapter 4 gegenüber dem stirnseitigen Ende 3 des Hohlprofils 2 tiefer eingelassen, um Bauteile zwischen Adapter und Tischplatte beziehungsweise Boden anordnen zu können, wie beispielsweise Träger 11, die in seitliche Ausnehmungen des Hohlprofils eingreifen.

Als weitere Ausführungsvariante (nicht dargestellt) können die Haltemittel 7 beziehungsweise 7' einstückig mit den Stegen 6 des Adapters 4 ausgebildet sein, um einerseits die Bauteilevielfalt zu reduzieren und andererseits den Montageprozess zu vereinfachen. In dieser Ausführungsvariante sind die in die Längsnuten 5 einbringbaren Haltemittel mit einem gegenüber dem Innendurchmesser der Längsnuten 5 versehenen Übermaß ausgestattet.

An dem innerhalb des Hohlprofiles 2 festgelegten Adapter 4 wird, wie schon erwähnt, beispielsweise ein Träger 11 zum Halten einer Tischplatte befestigt. Dieser Träger 11 (dargestllt in Figur 7) wird in bekannter Weise durch Befestigungsmittel mit dem Adapter 4 verbunden, wobei sich der Träger 11 im vorliegenden Falle am freien Ende 3 beziehungsweise im Ausschnitt 12 des Hohlprofiles 2 abstützt und somit den Adapter 4 gegen den Träger 11 anzieht.

Durch die Befestigungsmittel 8 ist der Adapter 4 in axialer Richtung fixiert, so dass sich eine hochbelastbare Verbindung zwischen dem Träger 11 und dem Adapter 4 ergibt.

Auch bei einseitigen Belastungen des Trägers 11 werden vorzugsweise in axialer Richtung des Hohlprofiles 2 wirksame Kräfte auf den Adapter 4 aufgebracht, welche durch die Befestigungsmittel 8 innerhalb der Längsnuten 5 sehr sicher abgetragen werden können.

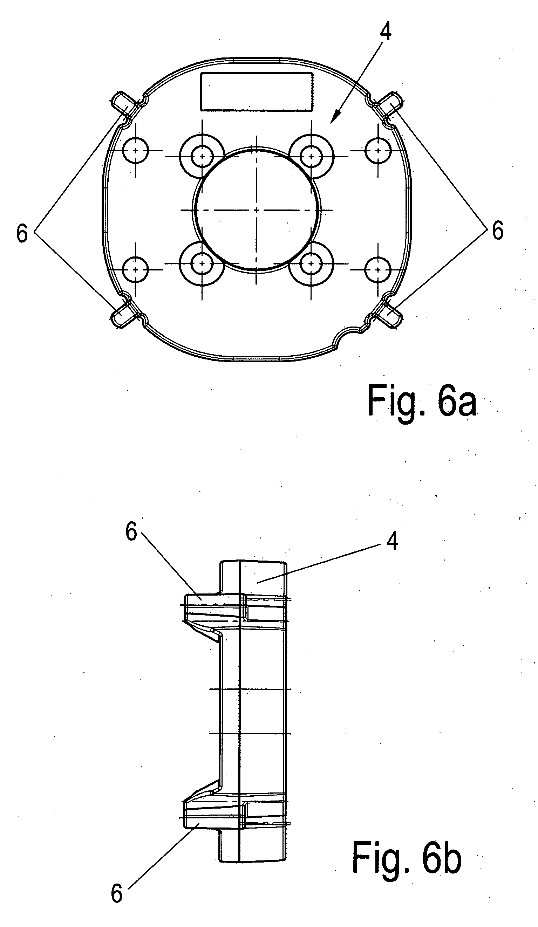

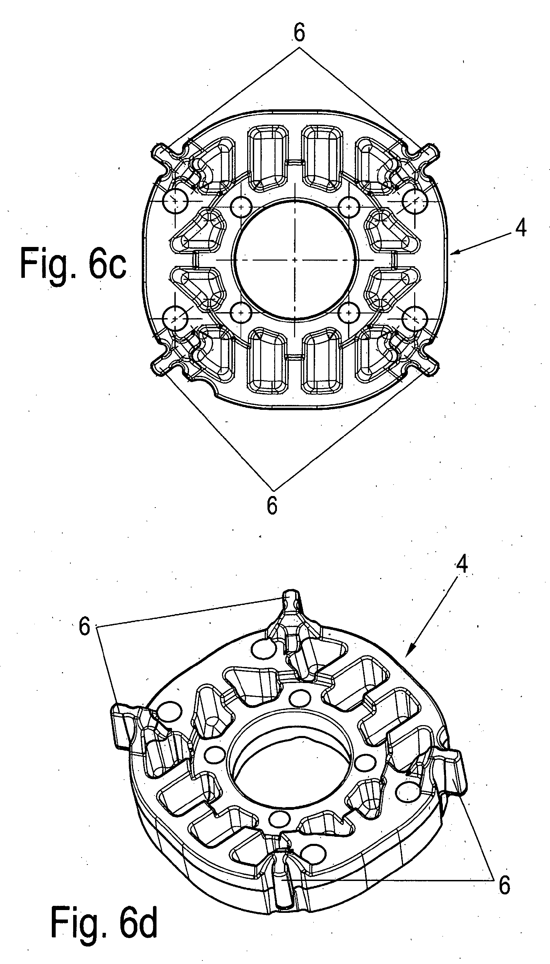

Der Adapter 4, der in verschiedenen Ansichten in den Figuren 6a bis 6d detailliert gezeigt ist, ist vorzugsweise als Gussteil ausgebildet, wobei eine Ausführungsform als Tempergussteil besonders bevorzugt ist wegen der entsprechend hohen Belastbarkeit. Die Materialwahl für den Adapter 4 kann entsprechend dem Belastungsfall erfolgen.

In vorteilhafter Weise ist der Adapter 4 mit den Stegen 6 einstückig als Gussteil, vorzugsweise als Tempergussteil, gefertigt.

Selbstverständlich kann an einem Adapter 4 beispielsweise auch ein Fußteil, ein Fußgestell oder dergleichen befestigt werden, sofern sich der Adapter 4 an einem in Gebrauchslage unterem Ende einer Tragsäule 1 befindet. Die Tragsäule 1 kann selbstverständlich auch an beiden stirnseitigen Enden mit Adaptern 4 ausgestattet sein.

Wie Figur 4 deutlich macht, kann der Adapter 4 auch dazu benutzt werden, beispielsweise eine Antriebseinheit 10 zu tragen, die als Stellmotor beispielsweise für eine teleskopierbare Tragsäule 1 dient.

Die Antriebseinheit 10 kann außerhalb der Tragsäule 1 mit dem Adapter 4 verbunden und danach als eine kompakte Einheit gemeinsam mit dem Adapter 4 innerhalb der Tragsäule festgelegt werden. Auch hierdurch ergibt sich eine deutliche Vereinfachung der Montage.

Bevorzugt ist das Hohlprofil 2 der Tragsäule 1 aus einem stranggezogenenen oder stranggespressten Profil gefertigt, wobei als Material bevorzugt Aluminium Verwendung findet.

### Bezugszeichenliste

- 1: Tragsäule
- 2: Hohlprofil
- 3: Freies Ende
- 4: Adapter
- 5: Längsnut
- 6: Steg
- 7: Haltemittel
- 8: Befestigungsmittel
- 9: Stirnseite
- 10: Antriebseinheit
- 11: Träger
- 12: Ausschnitt

## Patentansprüche

1. Tragsäule (1) in Form eines Hohlprofiles (2) zur Abstützung eines Möbelteiles, wobei an mindestens einem stirnseitigen Ende (3) des mit mehreren Längsnuten (5) versehenen Hohlprofiles (2) ein Adapter (4) im Hohlprofil (2) versenkt befestigt ist und der Adapter (4) mit Verbindungsmitteln zum Anschluss von beispielsweise Trägern (11) für Tischplatten, Fußteilen, Fußgestellen oder dergleichen versehen ist, **dadurch gekennzeichnet, dass** der Adapter (4) mit mehreren, in die Längsnuten (5) eingreifenden und dort axial abgestützten Stegen (6) versehen ist, auf deren dem benachbarten freien Ende (3) des Hohlprofiles (2) zugewandten Stirnseiten (9) in den Längsnuten (5) kraft-, form- und/oder stoffschlüssig festgelegte, Befestigungsmittel (8) zur axialen Sicherung des Adapters (4) in Richtung eines Trägers (11), eines Fußteiles oder dergleichen aufliegen.

2. Tragsäule (1) nach Anspruch 1, **dadurch gekennzeichnet, dass** die Stege (6) durch mindestens ein im Hohlprofil (2) eingebrachtes Haltemittel (7, 7') in axialer Richtung abgestützt sind.

3. Tragsäule (1) nach Anspruch 2, **dadurch gekennzeichnet, dass** die Stege (6) durch mindestens ein in mindestens einer Längsnut (5) eingebrachtes Haltemittel (7, 7') in axialer Richtung abgestützt sind.

4. Tragsäule (1) in Form eines Hohlprofiles (2) zur Abstützung eines Möbelteiles nach Anspruch 3, **dadurch gekennzeichnet, dass** jedes Haltemittel (7) als kraftschlüssig in der Längsnut (5) festgelegtes Spannelement, Spannhülse, Passstift oder dergleichen ausgebildet ist.

5. Tragsäule (1) nach Anspruch 2, **dadurch gekennzeichnet, dass** das Haltemittel (7, 7') als kraftschlüssig im Hohlprofil (2) und/oder in den Längsnuten (5) angeordnetes Formteil, insbesondere als kranz- oder ringförmiges Spannelement, ausgebildet ist.

6. Tragsäule (1) nach Anspruch 2, **dadurch gekennzeichnet, dass** das kraftschlüssig im Hohlprofil (2) und/oder in den Längsnuten (5) angeordnete Haltemittel einstückig aus den Stegen (6) des Adapters (4) und den Haltemitteln (7) ausgebildet ist.

7. Tragsäule (1) nach Anspruch 4, **dadurch gekennzeichnet, dass** die Haltemittel (7) als Gewindestifte, vorzugsweise selbstschneidende Gewindestifte, ausgebildet sind.

8. Tragsäule (1) nach einem der Ansprüche 2 bis 6, **dadurch gekennzeichnet, dass** das Haltemittel (7, 7') zusätzlich durch eine stoffschlüssige Verbindung, insbesondere durch Klebemittel, in der Längsnut (5) fixiert ist.

9. Tragsäule (1) nach einem der vorhergehenden Ansprüche, **dadurch gekennzeichnet, dass** die Befestigungsmittel (8) aus Spannelementen, Spannhülsen, Passstiften, bevorzugt aber aus Gewindestiften bestehen.

10. Tragsäule (1) nach Anspruch 9, **dadurch gekennzeichnet, dass** die Gewindestifte als selbstschneidende Gewindestifte ausgebildet sind.

11. Tragsäule (1) nach einem der Ansprüche 9 oder 10, **dadurch gekennzeichnet, dass** die Befestigungsmittel (8) zusätzlich durch eine stoffschlüssige Verbindung, insbesondere durch Klebemittel, innerhalb der Längsnuten (5) fixiert sind.

12. Tragsäule (1) nach einem der vorhergehenden Ansprüche, **dadurch gekennzeichnet, dass** der Adapter (4) mit den Stegen (6) einstückig hergestellt ist.

## Claims

1. A column (1) in form of a hollow profile (2) for supporting a furniture part, wherein an adapter (4) is fixed in a sunk fashion in the hollow profile (2) on at least one face end (3) of the hollow profile (2) provided with several longitudinal grooves (5), and the adapter (4) is provided with connection means for connecting supports (11) for tabletops, foot parts, pedestals or the like for example, **characterized in that** the adapter (4) is provided with several fins (6) engaging in the longitudinal grooves (5) and axially supported there, wherein fastening means (8), which are fixed in the longitudinal grooves (5) in a frictionally engaged, interlocking and/or materially bonded manner, rest on the face ends (9) of said fins facing the adjacent free end (3) of the hollow profile (2) for the purpose of axially securing the adapter (4) in the direction of a support (11), a foot part or the like.

2. A column (1) according to claim 1, **characterized in that** the fins (6) are supported in the axial direction by at least one retaining means (7, 7') introduced into the hollow profile (2).

3. A column (1) according to claim 2, **characterized in that** the fins (6) are supported in the axial direction by at least one retaining means (7, 7') introduced into at least one longitudinal groove (5).

4. A column (1) in form of a hollow profile (2) for supporting a furniture part according to claim 3, **characterized in that** each retaining means (7) is arranged as a clamping element, clamp sleeve, alignment pin or the like, which is fixed in a frictionally engaged manner in the longitudinal groove (5).

5. A column (1) according to claim 2, **characterized in that** the retaining means (7, 7') is arranged as a shaped part, especially as a rim-like or ring-like clamping element, which is arranged in a frictionally engaged manner in the hollow profile (2) and/or in the longitudinal grooves (5).

6. A column (1) according to claim 2, **characterized in that** the retaining means which is arranged in a frictionally engaged manner in the hollow profile (2) and/or in the longitudinal grooves (5) is arranged integrally from the fins (6) of the adapter (4) and the retaining means (7).

7. A column (1) according to claim 4, **characterized in that** the retaining means (7) are arranged as setscrews, preferably self-tapping setscrews.

8. A column (1) according to one of the claims 2 to 6, **characterized in that** the retaining means (7, 7') is additionally fixed in the longitudinal groove (5) by a materially bonded connection, especially by an adhesive.

9. A column (1) according to one of the preceding claims, **characterized in that** the fastening means (8) consist of clamping elements, clamp sleeves, alignment pins, but preferably setscrews.

10. A column (1) according to claim 9, **characterized in that** the setscrews are arranged as self-tapping setscrews.

11. A column (1) according to one of the claims 9 or 10, **characterized in that** the fastening means (8) are additionally fixed within the longitudinal grooves (5) by a materially bonded connection, especially by adhesives.

12. A column (1) according to one of the preceding claims, **characterized in that** the adapter (4) is integrally produced with the fins (6).

## Revendications

1. Colonne porteuse (1) formée par un profilé creux (2) pour le support d'une partie de meuble, dans laquelle un adaptateur (4) renfoncé dans le profilé creux (2) est fixé à au moins une extrémité frontale (3) du profilé creux (2) muni de plusieurs gorges longitudinales (5) et l'adaptateur (4) est muni de moyens d'assemblage pour le raccordement, par exemple, de supports (11) pour des plateaux de table, de parties de pied, de cadres de pied ou similaires, **caractérisée en ce que** l'adaptateur (4) est muni de plusieurs entretoises (6) se mettant en prise dans les gorges longitudinales (5) et s'y appuyant dans le sens axial, dont les faces d'extrémité (9) orientées vers l'extrémité libre (3) voisine du profilé creux (2) portent des éléments de fixation (8) fixés par friction, engagement positif et/ou solidarité de matière dans les gorges longitudinales (5) pour la fixation axiale de l'adaptateur (4) dans la direction d'un support (11), d'une partie de pied ou similaires.

2. Colonne porteuse (1) selon la revendication 1, **caractérisée en ce que** les entretoises (6) sont soutenues dans le sens axial par au moins un moyen de maintien (7, 7') inséré dans le profilé creux (2).

3. Colonne porteuse (1) selon la revendication 2, **caractérisée en ce que** les entretoises (6) sont soutenues dans le sens axial par au moins un moyen de maintien (7, 7') inséré dans au moins une gorge longitudinale (5).

4. Colonne porteuse (1) formée par un profilé creux (2) pour l'appui d'une partie de meuble selon la revendication 3, **caractérisée en ce que** chaque moyen de maintien (7) est conformé comme un élément de serrage, une douille de serrage, un goujon d'assemblage ou similaire, fixé par friction dans la gorge longitudinale (5).

5. Colonne porteuse (1) selon la revendication 2, **caractérisée en ce que** le moyen de maintien (7, 7') est conformé comme une pièce mise en forme disposée avec friction dans le profilé creux (2) et/ou dans les gorges longitudinales (5), en particulier comme un élément de serrage en forme de couronne ou de bague.

6. Colonne porteuse (1) selon la revendication 2, **caractérisée en ce que** le moyen de maintien disposé avec friction dans le profilé creux (2) et/ou dans les gorges longitudinales (5) est formé d'un seul tenant à partir des entretoises (6) de l'adaptateur (4) et des moyens de maintien (7).

7. Colonne porteuse (1) selon la revendication 4, **caractérisée en ce que** les moyens de maintien (7) sont conformés comme des tiges filetées, de préférence comme des tiges filetées autotaraudeuses.

8. Colonne porteuse (1) selon l'une des revendications 2 à 6, **caractérisée en ce que** le moyen de maintien (7, 7') est fixé en supplément dans la gorge longitudinale (5) par un assemblage par solidarité de matière, en particulier par des adhésifs.

9. Colonne porteuse (1) selon l'une des revendications précédentes, **caractérisée en ce que** les moyens de fixation (8) se composent d'éléments de serrage, de douilles de serrage, de goujons d'assemblage, mais de préférence de tiges filetées.

10. Colonne porteuse (1) selon la revendication 9, **caractérisée en ce que** les tiges filetées sont conformées comme des tiges filetées autotaraudeuses.

11. Colonne porteuse (1) selon l'une des revendications 9 ou 10, **caractérisée en ce que** les moyens de fixation (8) sont fixés en supplément à l'intérieur des gorges longitudinales (5) par un assemblage par solidarité de matière, de préférence par des adhésifs.

12. Colonne porteuse (1) selon l'une des revendications précédentes, **caractérisée en ce que** l'adaptateur (4) est fabriqué d'un seul tenant avec les entretoises (6).
